# EUROPEAN PATENT SPECIFICATION

(11) **EP 3 869 877 B1**
(45) Date of publication and mention of the grant of the patent: **13.03.2024**
(21) Application number: 20159073.4
(22) Date of filing: 24.02.2020
(51) Int. Cl.: H04W 60/00, H04W 8/20, H04W 8/18

(54) **CONFIGURING USAGE OF A COMMUNICATION NETWORK**
KONFIGURIEREN DER NUTZUNG EINES KOMMUNIKATIONSNETZES
CONFIGURATION DE L'UTILISATION D'UN RÉSEAU DE COMMUNICATION

(43) Date of publication of application: 25.08.2021
(73) Proprietor: NTT DoCoMo, Inc., Tokyo 100-6150 (JP)
(72) Inventor: SAMA, Malla Reddy, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- LG ELECTRONICS: "Solution: MT Service notification for MUSIM UE", 3GPP DRAFT; S2-2000650, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Incheon, Korea (Republic Of); 20200113 - 20200117 7 January 2020 (2020-01-07), XP051842707, Retrieved from the Internet: URL:https://ftp.3gpp.org/tsg_sa/WG2_Arch/T SGS2_136AH_Incheon/Docs/S2-2000650.zip S2-2000650_MUSIM_Sol_Paging Notification.docx [retrieved on 2020-01-07]
- NOKIA ET AL: "Solution for improved paging in MUSIM devices (KI#1,2,3)", 3GPP DRAFT; S2-2000855, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Incheon, Korea; 20200113 - 20200117 7 January 2020 (2020-01-07), XP051842909, Retrieved from the Internet: URL:https://ftp.3gpp.org/tsg_sa/WG2_Arch/T SGS2_136AH_Incheon/Docs/S2-2000855.zip S2-2000855 Solution paging MUSIM.docx [retrieved on 2020-01-07]
- "3rd Generation Partnership Project; Technical Specification Group Services and System Aspects; Study on system enablers for devices having multiple Universal Subscriber Identity Modules (USIM) (Release 17)", 3GPP DRAFT; 23761-030, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 28 January 2020 (2020-01-28), XP051845692, Retrieved from the Internet: URL:https://ftp.3gpp.org/tsg_sa/WG2_Arch/L atest_SA2_Specs/Latest_draft_S2_Specs/2376 1-030.zip 23761-030_MCCclean.docx [retrieved on 2020-01-28]

## Description

The present disclosure relates to communication network arrangements and methods for configuring usage of a communication network.

To be able to use two mobile communication networks at the same time (e.g. to be able to receive calls via both communication networks), a mobile communication terminal may include two subscriber identity modules. This is also referred to Multi-USIM or MUSIM, e.g. a UE may be a Multi-USIM terminal. Multi-USIM is currently handled in an implementation-specific manner without any support from 3GPP (3^{rd} generation partnership project) specifications.

Since the usage of MUSIM features and mechanisms is thus optional and may be supported (or desired) or not, approaches for configuring usage of MUSIM features are desirable.

LG ELECTRONICS: "Solution: MT Service notification for MUSIM 3GPP DRAFT"; S2-2000650, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX, FRANCE vol. SA WG2, no. Incheon, Korea (Republic Of); 20200113-20200117, 7 January 2020 (2020-01-07) discloses a procedure for handling mobile terminated services with multi USIM devices.

NOKIA ET AL: "Solution for improved paging in MUSIM devices (Kl#l 2, 3)", 3GPP DRAFT; S2-2000855, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX, FRANCE, vol. SA WG2, no. Incheon, Korea; 20200113-20200117, 7 January 2020 (2020-01-07) discloses a solution for improved paging in MUSIM devices.

"3rd Generation Partnership Project; Technical Specification Group Services and System Aspects; Study on system enablers for devices having multiple Universal Subscriber Identity Modules (USIM) (Release 17)". 3GPP DRAFT; 23761-030, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 28 January 2020 (2020-01-28) discloses a study on system enablers for devices having multiple Universal Subscriber Identity Modules. According to a first aspect of the present invention, a communication network arrangement of a (mobile) communication network is provided including the features according to claim 1. According to a second and a third aspect of the present invention, methods for configuring usage of a communication network including the features according to claims 10, respectively claim 11 are provided.

According to a fourth aspect of the present invention, a computer program and a computer readable medium is provided including the features according to claim 12.

Additional features for advantageous embodiments of the present invention are provided in the dependent claims.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: shows a communication arrangement.
- Figure 3: shows a communication arrangement with a Multi-USIM communication terminal.
- Figure 4: shows a message flow diagram for exchanging MUSIM capability information in a 5G communication system.
- Figure 5: shows a message flow diagram for exchanging MUSIM capability information in a 4G communication system.
- Figure 6: shows a message flow diagram for obtaining capability information from subscription information.
- Figure 7: shows a message flow diagram according to an embodiment illustrating a MUSIM capbaility exchange between a communication terminal and a communication network.
- Figure 8: shows a communication network arrangement of a communication network according to an embodiment.
- Figure 9: shows a flow diagram illustrating a method for configuring usage of a communication network according to an embodiment.
- Figure 10: shows a communication terminal according to an embodiment.
- Figure 11: shows a flow diagram illustrating a method for configuring usage of a communication network according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

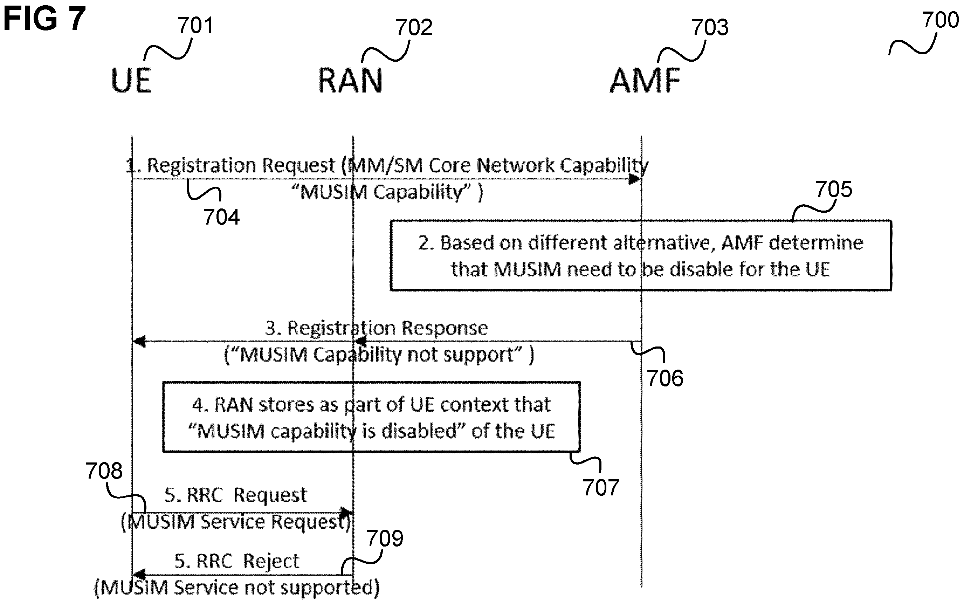

The embodiment related to figure 7 represents a way to implement the claimed invention.

Various embodiments of the present invention corresponding to aspects of this disclosure are described below:
In an embodiment of the present invention, the notification message may indicate whether the communication network supports that the communication terminal simultaneously uses multiple subscriber identity modules.

In an embodiment of the present invention, the notification message may indicate whether the communication network supports that the communication terminal is simultaneously registered or attached in the communication network and registered or attached in another communication network.

In an embodiment of the present invention, the notification message may include a capability information element including a value indicating whether the communication network supports that the communication terminal simultaneously uses multiple mobile communication network subscriptions.

In an embodiment of the present invention, the request message may indicate whether the communication terminal supports that the communication terminal simultaneously uses multiple mobile communication network subscriptions and wherein the transmitter is configured to transmit the notification message in response to the request message.

In an embodiment of the present invention according to the second aspect of the present invention the method may be performed by a core network component of the communication network.

Various informative examples helpful for a better understanding of the present invention are described below.

An informative example refers to a communication terminal including a transmitter configured to transmit a message to a communication network indicating whether the communication terminal supports that the communication terminal simultaneously uses multiple mobile communication network subscriptions and a receiver configured to receive a response message from the communication network indicating whether the communication network supports that the communication terminal simultaneously uses multiple mobile communication network subscriptions.

A further informative example refers to the communication terminal including a transmitter configured to transmit a message to a communication network indicating whether the communication terminal supports that the communication terminal simultaneously uses multiple mobile communication network subscriptions and a receiver configured to receive a response message from the communication network indicating whether the communication network supports that the communication terminal simultaneously uses multiple mobile communication network subscriptions, wherein the message is a request message for requesting a communication service from the communication network.

It should be noted that one or more of the features of any of the examples above may be combined with any one of the other examples.

In the following, various examples will be described in more detail.

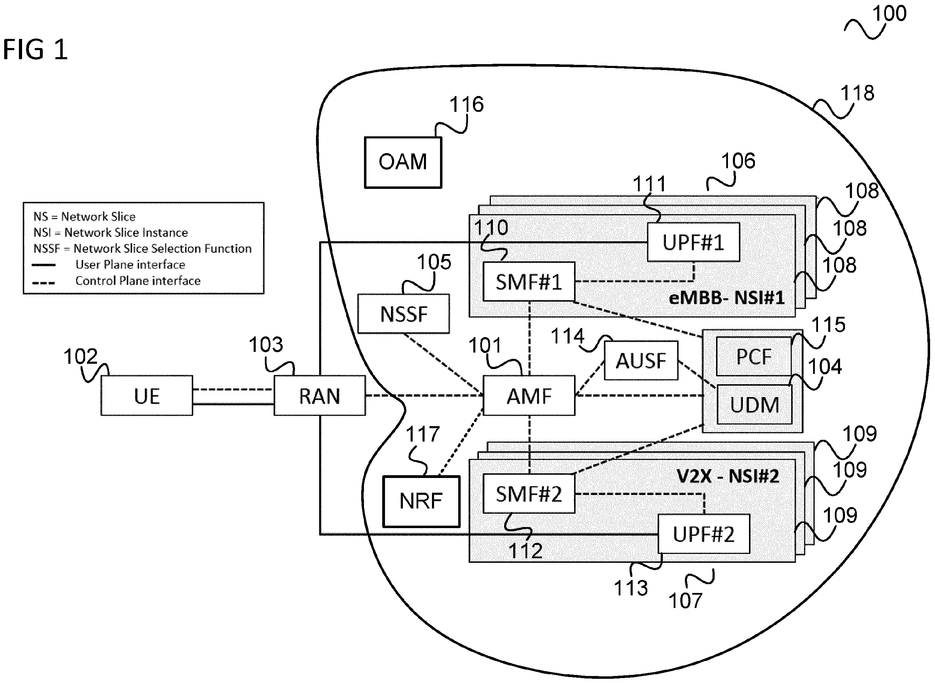

Figure 1 shows a radio communication system 100.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile communication network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another radio communication standard but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

The core network 118 may further include an NRF (Network Repository Function) 117, which provides network function/network function service registration, network function/network function service discovery. The NRF may have an interface to any network function in the mobile radio communication network side, e.g. have an interface to the AMF 101, the SMFs 110, 112. For simplicity, only the interface between the NRF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

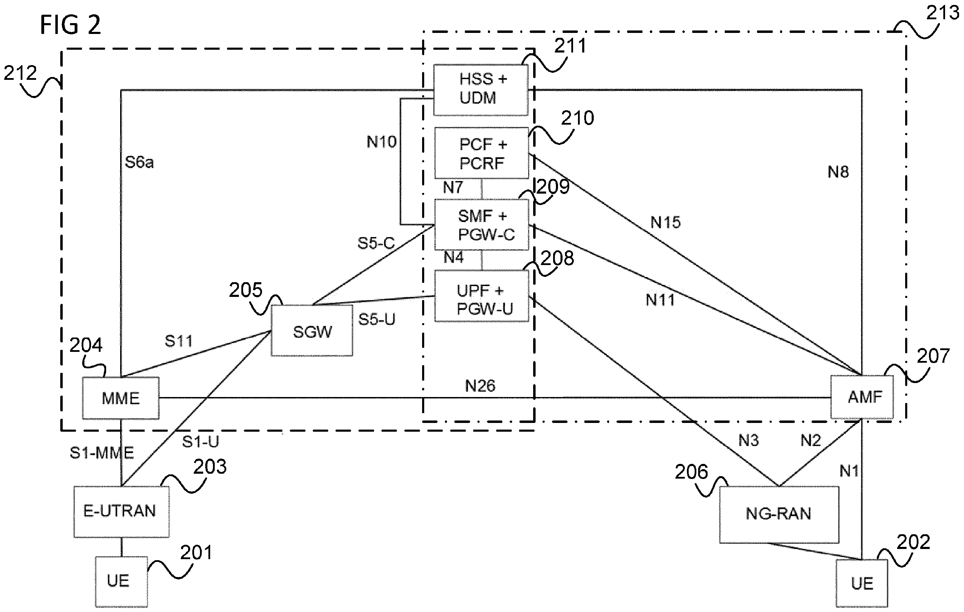

To ensure mobile network coverage a 5G mobile terminal 102 is typically capable to connect to both a 5G communication network, as illustrated in figure 1, and communication networks according to older communication networks, i.e. legacy networks, e.g. a 4G communication network, as it is illustrated in figure 2.

Figure 2 shows a communication arrangement 200.

The communication arrangement 200 includes a UE 201, 202 which may operate as a 4G UE 201 and as a 5G 202.

When operating as 4G UE 201, the UE is connected via a 4G radio access network 203, i.e. an E-UTRAN (evolved UMTS (Universal Mobile Telecommunications System) Terrestrial Radio Access Network) to an MME (Mobility Management Entity) 204 and an SGW (Serving Gateway) 205 which are part of a 4G core network.

When operating as 5G UE 202, the UE is connected to a 5G radio access network 206 and an AMF 207 which are part of a 5G core network.

In the present example, the communication arrangement 200 is shown to include components which combine (similar) 4G and 5G functionalities and can be seen to belong both the 4G core network and the 5G core network. However, these components may also be implemented separately, i.e. the 4G core network (EPC) 212 may be separate from the 5G core network 5GC 213 (and the various components may be split accordingly e.g. HSS in EPC and UDM in 5GC), in particular when the operator of the 4G communication network is different from the operator of the 5G communication network. These components include a UPF + PGW-U (PGW User Plane) 208, an SMF + PGW-C 209, a PCF + PCRF (Policy and Charging Rules Function) 210 and an HSS (Home Subscriber Server) + UDM (Unified Data Management) 211.

The SGW 205 is connected to the SMF + PGW-C 209 and the UPF + PGW-U 208. The MME 204 is connected to the HSS + UDM 211. The AMF 207 is connected to the PCF PCRF 210, the HSS + UDM 211 and the SMF + PGW-C 209. The 5G RAN 206 is connected to the UPF + PGW-U 208. Furthermore, the MME 204 and the AMF 207 are connected.

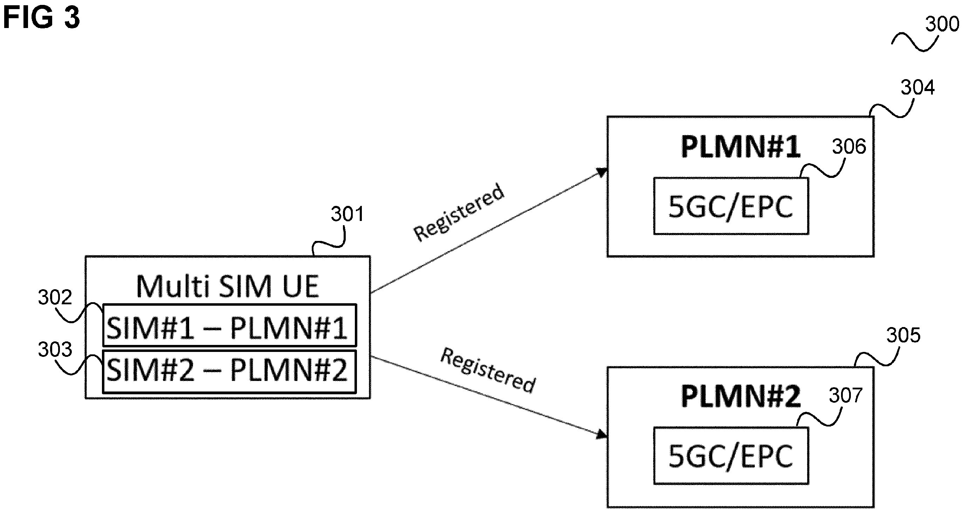

To be able to use in two communication networks, e.g. a 4G communication network and a 5G communication network simultaneously (e.g. to be registered in the EPC 212 and the 5GC 213 simultaneously within a PLMN or different PLMNs) or a 5G communication network and a 5G communication network simultaneously, the UE 201, 202 may be a UE including with multiple subscriber identity modules, also referred to as a Multi-USIM (Universal Subscriber Identity Module) UE. This is illustrated in figure 3.

Figure 3 shows a communication arrangement 300 with a Multi-USIM UE 301.

The Multi-USIM UE 301 includes a first subscriber identity module (e.g. a first USIM) 302 for a first (serving) PLMN 304 (PLMN#1) and a second subscriber identity module (e.g. a second USIM) 303 for a second (serving) PLMN 305 (PLMN#2) .

Each of the PLMNs 304, 305 is for example a 5G communication network or a 4G communication network or 5G and 4G communication networks and accordingly includes a 5G or 4G core network 306, 307.

It should be noted that while here and in the following it is assumed that there are two PLMNs 304, 305, the embodiments and approaches described herein may be analogously applied to the case that there is a single PLMN having two core networks, e.g. an EPC and a 5GC. This means that the core networks 306 and 307 may be of the same PLMN. When in the following is made to the two PLMNs 304, 305 this may thus also be understood as two core networks of a single PLMN.

The Multi-SIM UE 301 may be registered or attach in both PLMNs 304, 305, but the UE 301 can only be in CONNECTED mode or active in one of the PLMNs and is in the meantime in IDLE mode or unactive in the other PLMN or is in IDLE mode in both the PLMNs. For example, the UE 301 is in IDLE mode in PLMN#1 and in CONNECTED mode in PLMN#2.

To support that the UE 201, 202 uses both communication networks simultaneously by making use of multiple (in this case two) subscriber identity modules, the PLMNs 304, 305 support a mechanism or feature which is referred to as MUSIM mechanism or MUSIM feature in the following.

The MUSIM feature may include one or more of the following:
- A mechanism for delivering paging information (e.g. a paging message) destined to one subscription (e.g. the first SIM 302) while the communication terminal (e.g. UE 301) is actively communicating via a second subscription (e.g. the second SIM 303).
- A mechanism allowing for suspension (or release) and resumption of an ongoing connection via a first subscription (e.g. in the PLMN#1 associated with the first SIM 302), so that the communication terminal can temporarily use a second subscription (e.g. leave to the PLMN#2 associated with the second SIM 303 and then return to PLMN#1 in a networkcontrolled manner). This may include a mechanism to determine how the network handles MT (mobileterminated) data or MT control-plane activity occurrence on a suspended connection.
- A mechanism for avoidance of paging collisions occurring in the UE between two subscriptions (e.g. the first SIM 302 and the second SIM 303).
- A mechanism for service prioritization e.g. the terminal behaviour upon reception of paging information may be driven by USIM configuration or user preferences or both.

The MUSIM feature is optional and an operator (of a PLMN) is not required to support it. In the following, approaches are described which allow a UE to know whether a PLMN supports the MUSIM feature. Further, approaches are described how the UE behaves with regard to the MUSIM feature (i.e. when having multiple SIMs) if the network does not support the MUSIM feature.

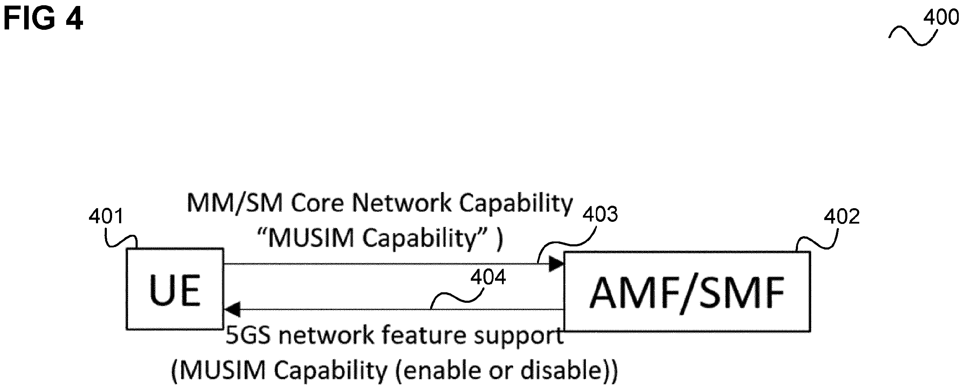

Figure 4 shows a message flow diagram 400 between a UE 401, e.g. corresponding to UE 202 (and/or UE 301) and a network function 402, e.g. an AMF or an SMF, e.g. corresponding to AMF 207 or SMF 209 (e.g. of PLMN 304 or PLMN 305).

In 403, during a Registration Request or a PDU (Protocol Data Unit) Session Establishment/Modification Request, the UE 401 provides "MUSIM capability" in the MM (Mobility Management) Core Network Capability and/or SM (Session Management) Core Network Capability to the network function 402 of one or multiple of the available (serving) PLMNs (e.g. PLMN 304 or PLMN 305 or both).

A network function of the respective PLMN (AMF/SMF 402 in this example) considers the UE capability and determines (e.g. based on local policy of the network funtion) whether it supports MUSIM capability (i.e. the MUSIM feature) or not. If not, the network function 402 notifies the UE 401 that the MUSIM capability is not supported.

In case of roaming (i.e. Local break-out (LBO) or Home routed (HR) scenarions), the serving network function of the serving PLMN (AMF/SMF 402 in visited PLMN in this example) or the home network function of the home PLMN (SMF 110, 112 in home PLMN in this example) considers the UE capability and determines (e.g. based on local policy of the network funtion) whether it supports MUSIM capability (i.e. the MUSIM feature) or not. If not, the network function 402 notifies the UE 401 that the MUSIM capability is not supported.

For example, if the PLMN supports MUSIM, it sends a "MUSIM capability" information element with enable indication and if the PLMN does not support MUSIM it sends a "MUSIM capability" information element with disable indication.

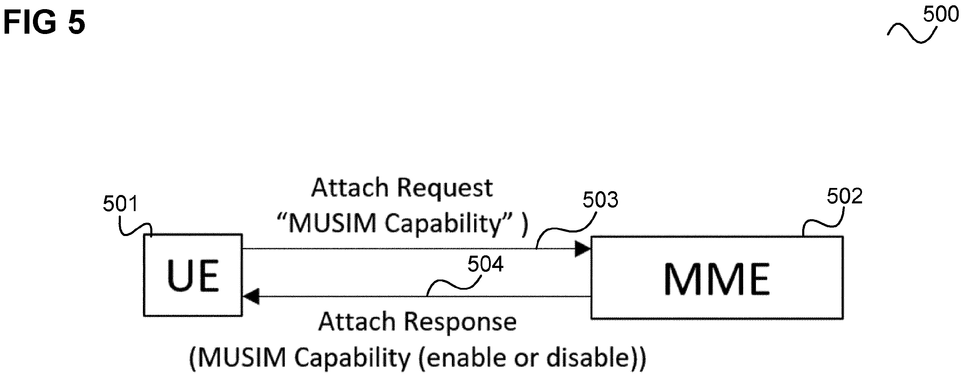

Figure 5 shows a message flow diagram 500 between a UE 501, e.g. corresponding to UE 201 (and/or UE 301) and an MME 502, e.g. corresponding to MME 204 (e.g. of PLMN 304 or PLMN 305 or both).

Similarly to the 5GC case of figure 4, in EPC of an available (serving) PLMN, the UE 501 provides MUSIM capability in 503 and depending on MUSIM support the EPC, i.e. the MME 502 in this example, of the PLMN notifies the UE 501 in 504 whether it supports the MUSIM feature, e.g. in form of an instruction to the UE to enable or disable the MUSIM capability. In case of roaming (i.e. Local break-out (LBO) or Home routed (HR) scenarions), the serving network function of the serving PLMN (MME 502 of visited PLMN in this example) or the home network function of the home PLMN (PGW 209 in home PLMN in this example) notifies the UE 501 in 504 whether it supports the MUSIM feature or not.

If a UE 401, 501 receives from a serving PLMN (e.g. either PLMN 304 or PLMN 305) the notification that it does not support the MUSIM, then UE 401, 501 disables usage of the MUSIM feature with regard to the serving PLMN and does not trigger any MUSIM specific triggers or mechanism. The UE 401, 501 may handle all capability of MUSIM locally with specific UE implementation logic.

Regarding the decision in the PLMN (e.g. in AMF/SMF 402 or in MME 502) whether notify the UE 401, 501 that the MUSIM capability is supported or not, various alternatives may be used including the following:
- The AMF/SMF 402 (or generally a network component, e.g. MME 502) is configured by operator policy locally which determines whether the MUSIM feature is disabled or not (and UEs should be notified accordingly)
- CAM configures the policy in the AMF/SMF/MME e.g. during initiation of an AMF in the PLMN
- The serving PLMN can enable or disable the MUSIM feature for a specific UE based on a local policy. For example, a Serving PLMN can provide MUSIM capability as a service to customers. In this case, the serving PLMN can enable the MUSIM capability for a UE#1 and disable for a UE#2. This may be based on subscription of a UE (e.g. MUSIM capability is enabled for high tariff users and disabled for low tariff users).

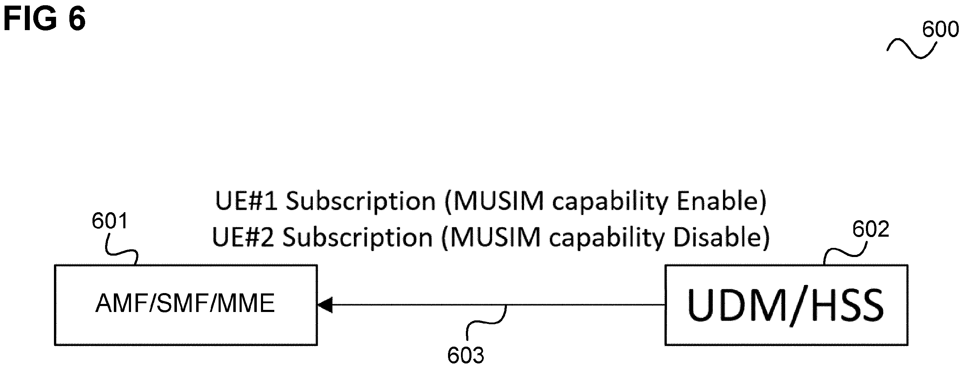

Figure 6 shows a message flow diagram 600 between a network component 601, e.g. an AMF or an SMF corresponding to the network function 402 or an MME corresponding to MME 502, and a UDM or HSS 602, e.g. corresponding to HSS + UDM 211.

In 603, the UDM/HSS 602 informs the network component 601 about the subscription of one or more UEs including information specifying (or from which it may derived) whether MUSIM capability is enabled or disabled for a respective UE.

Alternatively, the PCF or PCRF (e.g. corresponding to PCF + PCRF 210) informs the network component 601 about the policy of one or more UEs including information specifying (or from which it may derived) whether MUSIM capability is enabled or disabled for a respective UE. In case of roaming, either visited or home PCF/PCRF informs the serving network component based on local policy which can be determined based mutual agreement between operators (i.e. visited and home operators/PLMNs).

The network component may then notify the respective UE accordingly, e.g. as described with reference to figures 4 and 5.

In the following, an example of an exchange of information about MUSIM capability between a UE and a PLMN is described with reference to figure 7.

Figure 7 shows a message flow diagram 700 according to an embodiment.

The message flow takes place between a UE 701, e.g. corresponding to UE 202, a RAN 702, e.g. corresponding to RAN 206, and an AMF 703, e.g. corresponding to AMF 207. The RAN 702 and the AMF 703 belong to a PLMN (a serving PLMN of the UE 701).

In 704, with a Registration Request to the AMF 702 (or similarly with a PDU Session Establishment or Modification Request to an SMF or Attach Request to an MME), the UE 701 provides information about its MUSIM capability (e.g. a "MUSIM capability" information element) in the MM Core Network Capability (and/or SM Core Network Capability) to the AMF 703 (and/or SMF) in the PLMN.

In 705, the PLMN, i.e. the AMF 703 in this example, considers the UE capability and determines (e.g. based on local policy of respective network function, e.g. AMF 703 in this example) whether it support MUSIM capability or not. If not, the PLMN notifies the UE 701 that it does not support MUSIM capability. In the present example, in 706, the AMF 703 informs the UE 701 with a registration response that the PLMN does not support MUSIM capability. The AMF 703 also notifies the RAN 702 (e.g. with an N2 message) that the MUSIM capability is not supported or is disabled. In 707, the RAN (e.g. a corresponding RAN component or node) stores this information as part of UE context for the UE 701.

In case that in 708, the UE 701 ignores the MUSIM capability information (i.e. ignores that MUSIM is not supported by the PLMN) and requests a MUSIM service, the RAN 702 will, in 709, reject the UE's request.

Alternatively, even if the RAN 702 accepts the UE's request, the AMF 703 (and/or SMF) rejects the UE's request.

A similar procedure may be used for the case of an EPC PLMN (instead of a 5G PLMN): AMF may be replaced by MME and the UE triggers an EPC procedure like sending an Attach Procedure message instead of a Registration Request.

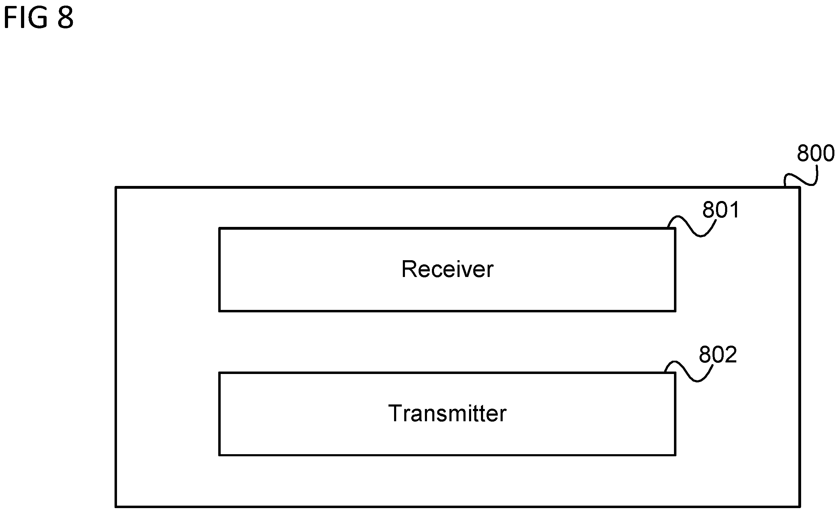

In summary, according to various embodiments, a communication network arrangement is provided as illustrated in figure 8.

Figure 8 shows a communication network arrangement 800 of a (mobile) communication network.

The communication network arrangement 800 includes a receiver 801 configured to receive a request message from a communication terminal.

The communication network arrangement 800 further includes a transmitter configured to transmit a notification message to the communication terminal indicating whether the communication network supports that the communication terminal simultaneously uses multiple mobile communication network subscriptions (e.g. is registered in or attached to multiple communication networks by means of multiple mobile communication subscriptions).

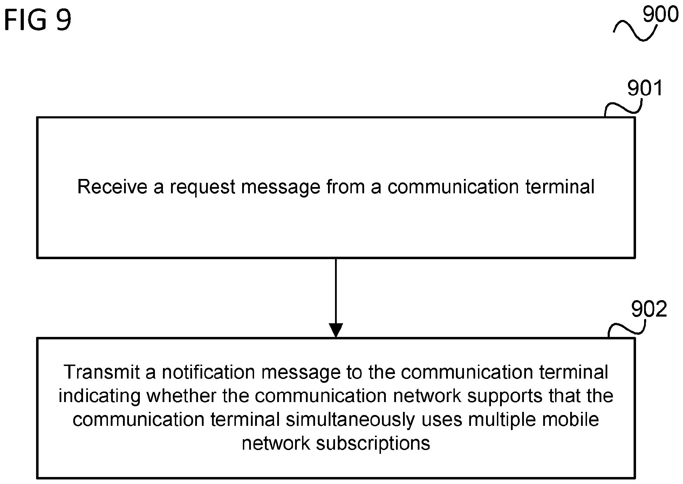

The communication network arrangement 800 for example carries out a method as illustrated in figure 9.

Figure 9 shows a flow diagram 900 illustrating a method for configuring usage of a communication network.

In 901, a request message from a communication terminal is received.

In 902, a notification message is transmitted to the communication terminal indicating whether the communication network supports that the communication terminal simultaneously uses multiple mobile communication network subscriptions.

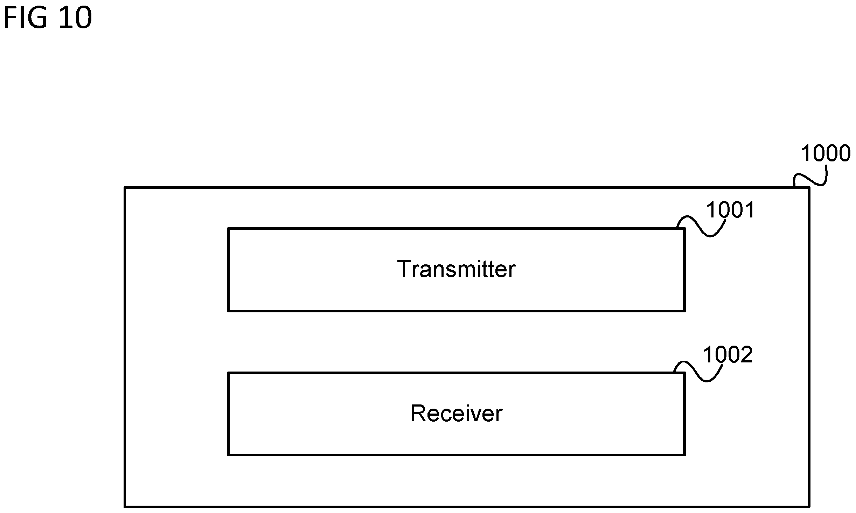

Figure 10 shows a communication terminal 1000 according to an embodiment.

The communication terminal 1000 includes a transmitter 1001 configured to transmit a message to a communication network indicating whether the communication terminal supports that the communication terminal simultaneously uses multiple mobile communication network subscriptions.

The communication terminal 1000 further includes a receiver 1002 configured to receive a response message from the communication network indicating whether the communication network supports that the communication terminal simultaneously uses multiple mobile communication network subscriptions.

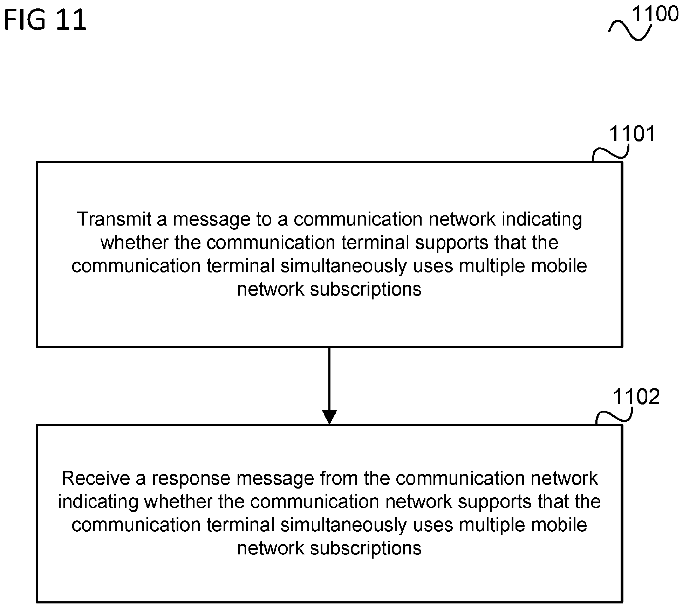

The communication terminal 1000 for example carries out a method as illustrated in figure 11.

Figure 11 shows a flow diagram 1100 illustrating a method for configuring usage of a communication network.

In 1101, a message is transmitted to a communication network indicating whether the communication terminal supports that the communication terminal simultaneously uses multiple mobile communication network subscriptions.

In 1102, a response message is received from the communication network indicating whether the communication network supports that the communication terminal simultaneously uses multiple mobile communication network subscriptions.

According to various embodiments, in other words, a communication network and a communication terminal exchange their capabilities or support regarding MUSIM. Thus, the communication network and the communication terminal may be configured with respect to the usage of MUSIM mechanisms or features.

The communication network arrangement may decide whether it is to be supported that the communication terminal uses multiple subscriptions, for example based on policy information stored in the communication arrangement (e.g. in a network function such as an AMF, an SMF or an MME), specifying a policy of the operator of the communication network with respect to MUSIM (i.e. usage of multiple subscriptions).

In particular, according to various embodiments, a mechanism is provided for a communication terminal (e.g. a UE) to share a Multi-USIM devices support notification (with a communication network). The communication terminal may take a corresponding action if a serving PLMN does not support Multi-USIM devices. For example, the communication terminal may avoid requesting services related to MUSIM (i.e. related to usage of multiple subscriptions) from the communication network.

The request message received by the communication network arrangement and the message transmitted by the communication terminal may for example be a registration request message, an attach request message, a session establishment request message or a session modification request message (e.g. a PDU Session Establishment/Modification Request message or a PDN (Packet Date Network) Connection Establishment/Modification Request message).

The components of the communication network arrangement and the communication terminal (e.g. the receiver, the controller, the detector and the transmitter) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. A communication network arrangement (300) of a communication network, comprising
a core network component (204, 205, 207, 208, 703) comprising a receiver and a transmitter;
the receiver configured to receive a request message (403, 503, 704) from a communication terminal (701); and
the transmitter configured to transmit a notification message (404 504, 706) to the communication terminal (301, 401, 501, 701) indicating whether the communication network supports that the communication terminal (301, 401, 501, 701) simultaneously uses multiple mobile communication network subscriptions;
wherein, if the communication network does not support that the communication terminal (301, 401, 501, 701) simultaneously uses multiple mobile communication network subscriptions, the core network component (703) notifies (706) a radio access network (704) that the communication network does not support that the communication terminal (301, 401, 501, 701) simultaneously uses multiple mobile communication network subscriptions; and
wherein the core network component (703) is an access and mobility management function or a mobility management entity; and
wherein the radio access network (704) is configured to store the information that the communication network does not support that the communication terminal (701) simultaneously uses multiple mobile communication network subscriptions.

2. The communication network arrangement of claim 1, wherein the request message (403, 503, 704) is a registration request message (704) to request registration of the communication terminal (701) in the communication network or an attach request message (704) to request an attachment of the communication terminal (701) at the communication network to request a session or a connection of the communication terminal (701) at the communication network.

3. The communication network arrangement of claim 2, wherein the notification message (404; 504, 706) is a registration response message or an attach response message.

4. The communication network arrangement of claim 1, wherein the core network component (703) is configured to store the information that the communication network does not support that the communication terminal (701) simultaneously uses multiple mobile communication network subscriptions and wherein the radio access network (704) or the core network component (703) is configured to reject requests by the communication terminal (701) for services related to the usage of a multiple mobile communication network subscriptions.

5. The communication network arrangement of any one of claims 1 to 4, wherein the communication network and/or the other communication network is a 4G or a 5G or 4G and 5G communication network(s).

6. The communication network arrangement of any one of claims 1 to 5, comprising a determiner configured to determine whether it is to be supported for the communication terminal (701) that the communication terminal (701) simultaneously uses multiple mobile communication network subscriptions.

7. The communication network arrangement of claim 6, wherein the determiner is configured to determine based on subscription information of the communication terminal (701) and/or a policy of an operator of the communication network whether it is to be supported for the communication terminal (701) that the communication terminal (701) simultaneously uses multiple mobile communication network subscriptions.

8. The communication network arrangement of claim 7, wherein the determiner is configured to receive information about the policy of an operator from a policy control function or policy and charging rules function of the communication network or a home communication network of the communication terminal (701).

9. The communication network arrangement of any one of claims 1 to 8, wherein the communication network arrangement is a visited network of the communication terminal (701).

10. A method for configuring usage of a communication network comprising
receiving by a core network component (204, 205, 207, 208, 703) a request message (403, 503, 704) from a communication terminal (301, 401, 501, 701); and
transmitting from the core network component (204, 205, 207, 208, 703) a notification message (404 504, 706) to the communication terminal (301, 401, 501, 701) indicating whether the communication network supports that the communication terminal (701)simultaneously uses multiple mobile communication network subscriptions;
wherein, if the communication network does not support that the communication terminal (301, 401, 501, 701) simultaneously uses multiple mobile communication network subscriptions, the core network component (703) notifies (706) a radio access network (704) that the communication network does not support that the communication terminal (301, 401, 501, 701) simultaneously uses multiple mobile communication network subscriptions; and
wherein the core network component (703) is an access and mobility management function, or a mobility management entity; and
wherein the radio access network (704) is configured to store the information that the communication network does not support that the communication terminal (701) simultaneously uses multiple mobile communication network subscriptions.

11. A method for configuring usage of a communication network comprising:
transmitting by a communication terminal (701) a message to a core components of a communication network indicating whether the communication terminal (701)supports that the communication terminal (701) simultaneously uses multiple mobile communication network subscriptions; and
receiving by the communication terminal (701) a response message from the core components of the communication network indicating whether the communication network supports that the communication terminal (701) simultaneously uses multiple mobile communication network subscriptions;
wherein, if the communication network does not support that the communication terminal (301, 401, 501, 701) simultaneously uses multiple mobile communication network subscriptions, the core network component (703) notifies (706) a radio access network (704) that the communication network does not support that the communication terminal (301, 401, 501, 701) simultaneously uses multiple mobile communication network subscriptions; and
wherein the core network component (703) is an access and mobility management function, or a mobility management entity; and
wherein the radio access network (704) is configured to store the information that the communication network does not support that the communication terminal (701) simultaneously uses multiple mobile communication network subscriptions.

12. A computer program and a computer readable medium including instructions, which, when executed by a computer of a core network component (703), make the computer perform the respective steps of the core network component as defined by the method of claim 10.

## Patentansprüche

1. Eine Kommunikationsnetzwerkanordnung (300) eines Kommunikationsnetzwerks, umfassend:
eine Kernnetzwerkkomponente (204, 205, 207, 208, 703), die einen Empfänger und einen Sender umfasst;
wobei der Empfänger eingerichtet ist, eine Anfragenachricht (403, 503, 704) von einer Kommunikationsendvorrichtung (701) zu empfangen; und
der Sender eingerichtet ist, eine Benachrichtigungsmitteilung (404, 504, 706) an die Kommunikationsendvorrichtung (301, 401, 501, 701) zu senden, die angibt, ob das Kommunikationsnetzwerk unterstützt, dass die Kommunikationsendvorrichtung (301, 401, 501, 701) gleichzeitig mehrere Mobilkommunikationsnetzwerksubskriptionen verwendet;
wobei, wenn das Kommunikationsnetzwerk nicht unterstützt, dass die Kommunikationsendvorrichtung (301, 401, 501, 701) gleichzeitig mehrere Mobilkommunikationsnetzwerksubskriptionen verwendet, die Kernnetzwerkkomponente (703) ein Funkzugangsnetzwerk (704) benachrichtigt, dass das Kommunikationsnetzwerk nicht unterstützt, dass die Kommunikationsendvorrichtung (301, 401, 501, 701) gleichzeitig mehrere Mobilkommunikationsnetzwerksubskriptionen verwendet; und
wobei die Kernnetzwerkkomponente (703) eine Zugangs- und Mobilitätsmanagementfunktion oder eine Mobilitätsmanagementeinheit ist; und
wobei das Funkzugangsnetzwerk (704) eingerichtet ist, die Information, dass das Kommunikationsnetzwerk nicht unterstützt, dass die Kommunikationsendvorrichtung (301, 401, 501, 701) gleichzeitig mehrere Mobilkommunikationsnetzwerksubskriptionen verwendet, zu speichern.

2. Die Kommunikationsnetzwerkanordnung gemäß Anspruch 1, wobei die Anfragenachricht (403, 503, 704) eine Registrierungsanfragenachricht (704) ist, um eine Registrierung der Kommunikationsendvorrichtung (701) in dem Kommunikationsnetzwerk anzufordern, oder eine Anschlussanfragenachricht (704), um einen Anschluss der Kommunikationsendvorrichtung (701) an das Kommunikationsnetzwerk anzufordern, um eine Sitzung oder eine Verbindung der Kommunikationsendvorrichtung (701) bei dem Kommunikationsnetzwerk anzufordern.

3. Die Kommunikationsnetzwerkanordnung gemäß Anspruch 2, wobei die Benachrichtigungsmitteilung (404; 504, 706) eine Registrierungsantwortmitteilung oder eine Anschlussantwortmitteilung ist.

4. Die Kommunikationsnetzwerkanordnung gemäß Anspruch 1, wobei die Kernnetzwerkkomponente (703) eingerichtet ist, die Information zu speichern, dass das Kommunikationsnetzwerk nicht unterstützt, dass die Kommunikationsendvorrichtung (701) gleichzeitig mehrere Mobilkommunikationsnetzwerksubskriptionen verwendet und wobei das Funkzugangsnetzwerk (704) oder die Kernnetzwerkkomponente (703) eingerichtet ist, Anfragen mittels der Kommunikationsendvorrichtung (701) für Dienste, die mit der Verwendung von mehreren Mobilkommunikationsnetzwerksubskriptionen zusammenhängen, abzulehnen.

5. Die Kommunikationsnetzwerkanordnung gemäß einem der Ansprüche 1 bis 4, wobei das Kommunikationsnetzwerk und/oder das andere Kommunikationsnetzwerk ein 4G oder ein 5G oder 4G und 5G Kommunikationsnetzwerk(e) sind.

6. Die Kommunikationsnetzwerkanordnung gemäß einem der Ansprüche 1 bis 5, umfassend einen Ermittler, der eingerichtet ist, zu ermitteln, ob es für die Kommunikationsendvorrichtung (701) unterstützt werden soll, dass die Kommunikationsendvorrichtung (701) gleichzeitig mehrere Mobilkommunikationsnetzwerksubskriptionen verwendet.

7. Die Kommunikationsnetzwerkanordnung gemäß Anspruch 6, wobei der Ermittler eingerichtet ist, basierend auf Subskriptionsinformation der Kommunikationsendvorrichtung (701) und/oder einer Richtlinie eines Betreibers des Kommunikationsnetzwerks zu ermitteln, ob es für die Kommunikationsendvorrichtung (701) unterstützt werden soll, dass die Kommunikationsendvorrichtung (701) gleichzeitig mehrere Mobilkommunikationsnetzwerksubskriptionen verwendet.

8. Die Kommunikationsnetzwerkanordnung gemäß Anspruch 7, wobei der Ermittler eingerichtet ist, Information über die Richtlinie eines Betreibers von einer Richtliniensteuerungsfunktion oder Richtlinien- und Gebührenregelungsfunktion des Kommunikationsnetzwerks oder einem Heimkommunikationsnetzwerk der Kommunikationsendvorrichtung (701) zu empfangen.

9. Die Kommunikationsnetzwerkanordnung gemäß einem der Ansprüche 1 bis 8, wobei die Kommunikationsnetzwerkanordnung ein besuchtes Netzwerk der Kommunikationsendvorrichtung (701) ist.

10. Ein Verfahren zur Einrichtung der Verwendung eines Kommunikationsnetzwerks, umfassend:
Empfangen mittels einer Kernnetzwerkkomponente (204, 205, 207, 208, 703) einer Anfragenachricht (403, 503, 704) von einer Kommunikationsendvorrichtung (301, 401, 501, 701); und
Senden von der Kernnetzwerkkomponente (204, 205, 207, 208, 703) einer Benachrichtigungsmitteilung (404, 504, 706) an die Kommunikationsendvorrichtung (301, 401, 501, 701), die angibt, ob das Kommunikationsnetzwerk unterstützt, dass die Kommunikationsendvorrichtung (701) gleichzeitig mehrere Mobilkommunikationsnetzwerksubskriptionen verwendet;
wobei, wenn das Kommunikationsnetzwerk nicht unterstützt, dass die Kommunikationsendvorrichtung (301, 401, 501, 701) gleichzeitig mehrere Mobilkommunikationsnetzwerksubskriptionen verwendet, die Kernnetzwerkkomponente (703) ein Funkzugangsnetzwerk (704) benachrichtigt, dass das Kommunikationsnetzwerk nicht unterstützt, dass die Kommunikationsendvorrichtung (301, 401, 501, 701) gleichzeitig mehrere Mobilkommunikationsnetzwerksubskriptionen verwendet; und
wobei die Kernnetzwerkkomponente (703) eine Zugangs- und Mobilitätsmanagementfunktion oder eine Mobilitätsmanagementeinheit ist; und
wobei das Funkzugangsnetzwerk (704) eingerichtet ist, die Information, dass das Kommunikationsnetzwerk nicht unterstützt, dass die Kommunikationsendvorrichtung (301, 401, 501, 701) gleichzeitig mehrere Mobilkommunikationsnetzwerksubskriptionen verwendet, zu speichern.

11. Ein Verfahren zur Einrichtung der Verwendung eines Kommunikationsnetzwerks, umfassend:
Senden mittels einer Kommunikationsendvorrichtung (701) einer Nachricht an eine Kernkomponente eines Kommunikationsnetzwerks, die angibt, ob die Kommunikationsendvorrichtung (701) unterstützt, dass die Kommunikationsendvorrichtung (701) gleichzeitig mehrere Mobilkommunikationsnetzwerksubskriptionen verwendet; und
Empfangen mittels der Kommunikationsendvorrichtung (701) einer Antwortmitteilung von den Kernkomponenten des Kommunikationsnetzwerks, die angibt, ob das Kommunikationsnetzwerk unterstützt, dass die Kommunikationsendvorrichtung (701) gleichzeitig mehrere Mobilkommunikationsnetzwerksubskriptionen verwendet;
wobei, wenn das Kommunikationsnetzwerk nicht unterstützt, dass die Kommunikationsendvorrichtung (301, 401, 501, 701) gleichzeitig mehrere Mobilkommunikationsnetzwerksubskriptionen verwendet, die Kernnetzwerkkomponente (703) ein Funkzugangsnetzwerk (704) benachrichtigt, dass das Kommunikationsnetzwerk nicht unterstützt, dass die Kommunikationsendvorrichtung (301, 401, 501, 701) gleichzeitig mehrere Mobilkommunikationsnetzwerksubskriptionen verwendet; und
wobei die Kernnetzwerkkomponente (703) eine Zugangs- und Mobilitätsmanagementfunktion oder eine Mobilitätsmanagementeinheit ist; und
wobei das Funkzugangsnetzwerk (704) eingerichtet ist, die Information, dass das Kommunikationsnetzwerk nicht unterstützt, dass die Kommunikationsendvorrichtung (701) gleichzeitig mehrere Mobilkommunikationsnetzwerksubskriptionen verwendet, zu speichern.

12. Ein Computerprogramm und ein computerlesbares Medium, enthaltend Instruktionen, die, wenn mittels eines Computers einer Kernnetzwerkkomponente (703) ausgeführt, den Computer veranlassen, die jeweiligen Schritte der Kernnetzwerkkomponente wie durch das Verfahren gemäß Anspruch 10 festgelegt, durchzuführen.

## Revendications

1. Agencement de réseau de communication (300) d'un réseau de communication, comprenant :
un composant de réseau central (204, 205, 207, 208, 703) comprenant un récepteur et un émetteur ;
le récepteur configuré pour recevoir un message de demande (403, 503, 704) d'un terminal de communication (701) ; et
l'émetteur configuré pour transmettre un message de notification (404 504, 706) au terminal de communication (301, 401, 501, 701) indiquant si le réseau de communication soutient que le terminal de communication (301, 401, 501, 701) utilise simultanément plusieurs abonnements réseau de communication mobile ;
dans lequel, si le réseau de communication ne soutient pas que le terminal de communication (302, 402, 502, 702) utilise simultanément plusieurs abonnements réseau de communication mobile, le composant de réseau central (703) notifie (706) à un réseau d'accès radio (704) que le réseau de communication ne soutient pas que le terminal de communication (301, 401, 501, 701) utilise simultanément plusieurs abonnements réseau de communication mobile ; et
dans lequel le composant de réseau central (703) est une fonction de gestion d'accès et de mobilité ou une entité de gestion de mobilité ; et
dans lequel le réseau d'accès radio (704) est configuré pour stocker l'information selon laquelle le réseau de communication ne soutient pas que le terminal de communication (701) utilise simultanément plusieurs abonnements réseau de communication mobile.

2. Agencement de réseau de communication selon la revendication 1, dans lequel le message de demande (403, 503, 704) est un message de demande d'enregistrement (704) pour demander l'enregistrement du terminal de communication (701) dans le réseau de communication ou un message de demande d'attachement (704) pour demander un attachement du terminal de communication (701) au réseau de communication pour demander une session ou une connexion du terminal de communication (701) au réseau de communication.

3. Agencement de réseau de communication selon la revendication 2, dans lequel
le message de notification (404 ; 504, 706) est un message de réponse d'enregistrement ou un message de réponse d'attachement.

4. Agencement de réseau de communication selon la revendication 1, dans lequel
le composant de réseau central (703) est configuré pour stocker l'information selon laquelle le réseau de communication ne soutient pas que le terminal de communication (701) utilise simultanément plusieurs abonnements réseau de communication mobile et dans lequel le réseau d'accès radio (704) ou le composant de réseau central (703) est configuré pour rejeter des demandes par le terminal de communication (701) de services liés à l'utilisation de plusieurs abonnements réseau de communication mobile.

5. Agencement de réseau de communication selon l'une quelconque des revendications 1 à 4, dans lequel le réseau de communication et/ou l'autre réseau de communication est un réseau de communication 4G ou 5G ou 4G et 5G.

6. Agencement de réseau de communication selon l'une quelconque des revendications 1 à 5, comprenant un déterminant configuré pour déterminer s'il doit être soutenu pour le terminal de communication (701) que le terminal de communication (701) utilise simultanément plusieurs abonnements réseau de communication mobile.

7. Agencement de réseau de communication selon la revendication 6, dans lequel le déterminant est configuré pour déterminer, sur la base d'informations d'abonnement du terminal de communication (701) et/ou d'une politique d'un opérateur du réseau de communication, s'il doit être soutenu pour le terminal de communication (701) que le terminal de communication (701) utilise simultanément plusieurs abonnements réseau de communication mobile.

8. Agencement de réseau de communication selon la revendication 7, dans lequel le déterminant est configuré pour recevoir des informations sur la politique d'un opérateur à partir d'une fonction de contrôle de politique ou d'une fonction de politique et de règles de facturation du réseau de communication ou d'un réseau de communication domestique du terminal de communication (701).

9. Agencement de réseau de communication selon l'une quelconque des revendications 1 à 8, dans lequel l'agencement de réseau de communication est un réseau visité du terminal de communication (701).

10. Procédé de configuration de l'utilisation d'un réseau de communication comprenant :
la réception par un composant de réseau central (204, 205, 207, 208, 703) d'un message de demande (403, 503, 704) provenant d'un terminal de communication (301, 401, 501, 701) ; et
la transmission, à partir du composant de réseau central (204, 205, 207, 208, 703), d'un message de notification (404, 504, 706) au terminal de communication (301, 401, 501, 701) indiquant si le réseau de communication soutient que le terminal de communication (701) utilise simultanément plusieurs abonnements réseau de communication mobile ;
dans lequel, si le réseau de communication ne soutient pas que le terminal de communication (301, 401, 501, 701) utilise simultanément plusieurs abonnements réseau de communication mobile, le composant de réseau central (703) notifie (706) à un réseau d'accès radio (704) que le réseau de communication ne soutient pas que le terminal de communication (301, 401, 501, 701) utilise simultanément plusieurs abonnements réseau de communication mobile ; et
dans lequel le composant de réseau central (703) est une fonction de gestion d'accès et de mobilité, ou une entité de gestion de mobilité ; et
dans lequel le réseau d'accès radio (704) est configuré pour stocker l'information selon laquelle le réseau de communication ne soutient pas que le terminal de communication (701) utilise simultanément plusieurs abonnements réseau de communication mobile.

11. Procédé de configuration d'utilisation d'un réseau de communication, comprenant :
la transmission par un terminal de communication (701) d'un message à un composant central d'un réseau de communication indiquant si le terminal de communication (701) soutient que le terminal de communication (701) utilise simultanément plusieurs abonnements réseau de communication mobile ; et
la réception par le terminal de communication (701) d'un message de réponse des composants centraux du réseau de communication indiquant si le réseau de communication soutient que le terminal de communication (701) utilise simultanément plusieurs abonnements réseau de communication mobile ;
dans lequel, si le réseau de communication ne soutient pas que le terminal de communication (301, 401, 501, 701) utilise simultanément plusieurs abonnements réseau de communication mobile, le composant de réseau central (703) notifie (706) à un réseau d'accès radio (704) que le réseau de communication ne soutient pas que terminal de communication (301, 401, 501, 701) utilise simultanément plusieurs abonnements réseau de communication mobile ; et
dans lequel le composant de réseau central (703) est une fonction de gestion d'accès et de mobilité, ou une entité de gestion de mobilité ; et
dans lequel le réseau d'accès radio (704) est configuré pour stocker l'information selon laquelle le réseau de communication ne soutient pas que le terminal de communication (701) utilise simultanément plusieurs abonnements réseau de communication mobile.

12. Programme d'ordinateur et support lisible par ordinateur comprenant des instructions qui, lorsqu'elles sont exécutées par un ordinateur d'un composant de réseau central (703), font que l'ordinateur exécute les étapes respectives du composant de réseau central telles que définies par le procédé selon la revendication 10.
